# EUROPEAN PATENT SPECIFICATION

(11) **EP 2 057 549 B1**
(45) Date of publication and mention of the grant of the patent: **11.04.2018**
(21) Application number: 07789193.5
(22) Date of filing: 10.08.2007
(51) Int. Cl.: G06F 13/38, G06F 13/28

(54) **IMPROVEMENTS RELATING TO DIRECT DATA INPUT/OUTPUT INTERFACES**
VERBESSERUNGEN IN BEZUG AUF SCHNITTSTELLEN ZUR DIREKTDATENEINGABE/-AUSGABE
AMÉLIORATIONS CONCERNANT DES INTERFACES D'ENTRÉE/SORTIE DIRECTES DE DONNÉES

(30) Priority: 11.08.2006 GB 0616025
(43) Date of publication of application: 13.05.2009
(73) Proprietor: Telefonaktiebolaget LM Ericsson (publ), 164 83 Stockholm (SE)
(72) Inventor: WHITAKER, Martin, Buckinghamshire HP 11 2DJ (GB); LANCASTER, John, Buckinghamshire HP 11 2DJ (GB)
(74) Representative: Brann AB
(86) International application number: PCT/GB2007/003067
(87) International publication number: WO 2008/017872

(56) References cited:
- EP-A- 0 932 307
- EP-A- 1 260 908
- WO-A-00/41084
- WO-A-2004/049179
- WO-A-2005/013084
- WO-A-2005/124565
- US-A- 5 111 425

## Description

### Field of the Invention

The present invention concerns improvements relating to direct data input/output interfaces and provides, more specifically, a high-speed data input/output interface suitable for use with a SIMD processor. High-speed data is often generated or consumed directly via such an interface from an external data source or sink - a concept termed herein as 'streaming'.

### Background of the Invention

Single Instruction Multiple Data (SIMD) processors are a class of data-parallel processors in which a plurality of processing elements making up the processor perform the same operation at the same time but on different data. SIMD processors have an array of identical processing elements coupled together with a single control unit. Each processing element acts as a small basic computer in that it has an Arithmetic Logic Unit (ALU) and a local data store (either a register file, a memory, or both). The control unit functions to control simultaneously the processes carried out on each processing element and these processes basically consist of reading the data from the local data store, carrying out an operation on the data in the ALU, and then writing the result back to the local data store.

SIMD processors typically process data sets loaded into the data stores of the processing elements from a main data store such as a video memory. The loaded data can then be processed in parallel by the SIMD processor and the processed data can be written back to the main data store. Typically, the data sets in question are subsets of larger, highly regular, data sets, for example two-dimensional images (such as pixel arrays) or three-dimensional volume data (such as voxel arrays).

Typically, each access to the main data store can read or write multiple data items. For example, when accessing a DRAM memory, a single access may read or write four contiguous memory words, and each memory word may itself hold multiple data items. If each data subset processed by the SIMD processor is stored in contiguous locations in the main data store, the data can be efficiently transferred to or from the data stores of the processing elements using a minimal number of main data store accesses. If, however, a required data subset is spread across non-contiguous locations in the main data store, the number of accesses, and hence the time taken to load or store the data, will increase.

In many applications, the unprocessed data sets held in the main data store are obtained from a streaming data interface coupled to an external device such as a video camera. Similarly, the processed data sets may be output to a streaming data interface coupled to an external device such as a video monitor. Typically the streaming data interfaces consist of a FIFO (first in, first out buffer) and a DMA (direct memory access) unit that transfers the stream of data between the FIFO and the main memory.

Existing streaming data interfaces typically contain a simple DMA unit that only allows data to be stored in main memory in the same order as it is streamed in or out. More advanced interfaces may contain a scatter/gather DMA unit, but normally this still requires data to be stored in blocks of contiguous locations. Thus, unless the streamed data order matches the order in which the data is processed by the SIMD processor, the data cannot be stored in main memory in a format that permits efficient transfer to and from the SIMD processing element data stores.

Examples of a DMA (Direct Memory Access) unit, or a dedicated unit with similar (although enhanced) memory data handling functionality memory can be seen in US patent nos. 4,835,729 and 5,581,773.

Although a streaming data interface DMA unit could be designed to transfer data to or from arbitrary locations in the main data store, this would suffer from the same memory access inefficiency as was described earlier in relation to transferring data to and from the SIMD processor.

For a general-purpose SIMD processor, the streaming data interfaces may be required to connect to many different types of external device, each of which might stream data in a different order. In addition, the order in which data is processed will depend on the type of data received and the processing steps to be performed.

When more complex address transformations are required, when for example the addresses of the data items are non-contiguous, then a conventional CPU (Central Processing Unit), with its complex address calculation support, actually offers superior performance over the DMA unit solution. This performance differential is still maintained even if the data processing part of the problem is inherently data-parallel. Accordingly, one performance enhancing solution is to employ a 'conventional' processor to precompute the addresses and prefetch the data vectors for the SIMD parallel processor to process.

The disadvantage of this prior art solution is that it is a non-optimal solution that does not take advantage of the inherent parallel nature of the data-parallel processor to compute the address vectors itself. Moreover, if a conventional processor is used to compute the addresses this may itself become the bottleneck, if it cannot keep pace with the enormous demand for data from the parallel processor or, conversely, if the address computational task is too onerous.

EP1260908A2 discloses a data transfer control device using USB (a first bus), the end of a data phase (data transport: transfer of all the data) during an OUT transaction is determined on condition that data transmission (DMA transfer) through EBUS (a second bus) has ended, and the end of a data phase during an IN transaction is determined on condition that data reception through EBUS has ended and also an Empty signal has gone active, indicating that a data storage area has become empty. A counter that counts the data size is provided on the EBUS side. If data reception through EBUS ends and the size of data remaining in the data storage area is less than the maximum packet size, a short packet in the data storage area is transmitted automatically through USB and an interrupt is used to notify the firmware of the presence of the short packet.

WO00/41084 discloses a direct memory access engine (DMA) system and method for maximising DMA transfers of arbitrarily aligned data. The present invention utilizes physical regopm descriptors (PRD) stored in memory to tract locations and descriptions of scattered data in a main memory. The direct memory access circuit retrieves the data in accordance with the PRD and configures the data into pieces such that intermediate pieces of data between a first piece and a last piece are the maximum amount of information a communication burst is capable of transferring and the intermediate pieces of data are aligned to a natural boundary address. The DMA engine also communicates the first piece of data and the last piece of data in a manner that minimizes memory accesses and in transfer sizes that are compatible with requirements and limitations of a system in which DMA engine is implemented. The DMA rotates bytes of the data to compensate for misalignment between a source address and a destination address and merges the data into a concatenated stream.

US5111425 discloses a DMA controller incorporated in a data processor, comprising a plurality of channels and a control circuit for overseeing these channels. Each of these channels has registers for storing transfer parameters (address and byte count), registers for storing control parameters (status and command), data assembler circuit, and a channel control circuit that controls these registers and data assembler circuits. The channel control circuit in each channel simultaneously processes transfer parameters for an increased data transmission rate and a reduction of the internal processing unit work load.

It is desired to overcome or substantially reduce some of the abovementioned problems. More specifically, it is desired to provide a high-speed direct data input interface (DDI) and/or high-speed direct data output interface (DDO) providing efficient and flexible support for high-speed digital data streams directed between the main data store and external data sources (or sinks).

### Summary of the Invention

The present invention resides in the appreciation that data handling rates for input and output data streams to and from a parallel processing device can be significantly improved by employing a programmable direct data input or output interface which is arranged to change the order of received data bytes in order to effect format changes and that this can be controlled by user configurable hardware at a machine code level. A programmable high-speed data interface according to the independent claims is the object of the present invention. More specifically, according to one embodiment there is provided a programmable, high-speed data interface in which input data in any format (for example, number of streams, type and/or size of data within a stream) can be manipulated by a set of locally configurable DMA channels for direct storage into memory.

The improvements in speed provided by the present invention result in the interface being operable in real-time.

According to another aspect there is provided a programmable, high-speed data input interface for inputting one or more data streams in a first format into a data store, of a parallel processing architecture, in a second format, the interface comprising: at least one direct memory access channel for controlling the conversion of the data received from the one or more data streams in the first format into the second format, wherein the at least one direct memory access channel comprises a byte assembler having a plurality of locally configurable data processors for controlling the selection of bytes of data from the one or more data streams, to facilitate creation of a composite data word for storage in the second format.

It is to be appreciated that symmetrical or asymmetrical partitioning of data streams can be carried out by the interface.

A method of inputting one or more data streams in a first format into a data store of a parallel processing architecture in a second format, the method comprising: controlling the conversion of the data received from one or more data streams in the first format into the second format using at least one direct memory access channel, wherein the controlling step comprises: determining the selection of bytes of data from the one or more data streams using a byte assembler of the at least one direct memory access channel; controlling the selection of bytes of data from the one or more data streams, using a plurality of locally configurable data processors of the byte assembler; and facilitating creation of a composite data word for storage in the second format.

Conversely, it is to be appreciated that the invention also extends to an interface which can also perform the reverse operations for output data. More specifically, according to another embodiment there is provided a programmable, high-speed data output interface in which data stored in memory in any format can be manipulated by a set of configurable DMA channels for direct output from the memory via the interface.

According to another embodiment there is provided a programmable, high-speed data output interface for outputting one or more data sets in a second format in a data store of a parallel processing architecture, into at least one data stream in a first format, the interface comprising: at least one direct memory access channel for controlling the conversion of the one or more data sets obtained from the data store in the second format into one or more data streams in the first format, wherein the at least one direct memory access channel comprises a byte disassembler having a plurality of locally configurable data processors for controlling the disassembly of data words from the one or more data sets, to facilitate creation of the at least one data stream for output in the first format. Another non-claimed embodiment also extends to a method of outputting one or more data streams in a first format from a data set in a second format in a data store of a parallel processing architecture, the method comprising: facilitating reading of a composite data word from data storage in the second format; and controlling the conversion of the data received from the data store in the second format into the first format using at least one direct memory access channel, wherein the controlling step comprises: determining a selection of bytes of data from the received data word using a byte disassembler of the at least one direct memory access channel; and controlling the selection of bytes of data from the received data word, using a plurality of locally configurable data processors of the byte disassembler.

It is also to be appreciated that any of the interfaces described above may be part of a massively parallel processing architecture.

### Brief Description of the Drawings

Methods and apparatus according to a preferred embodiment of the invention will now be described by way of example, with reference to the accompanying drawings in which:
Figure 1 is a schematic block diagram showing the main data store of a SIMD processor, which is herein abbreviated to 'SIMD data store' (or SDS) connected to two external data sources and one external data sink via a high-speed streaming data input/output interface embodying the present invention;
Figure 2 is a schematic block diagram showing the input part of the streaming data input/output interface of Figure 1 in more detail, the input part comprising a plurality of input data ports and DMA channels;
Figure 3a is a logical circuit diagram showing an input data port of the input interface of Figure 2 in more detail, the input data port comprising a pair of odd and even FIFOs (first in first out buffer);
Figure 3b is a waveform diagram showing SDR (Single Data Rate) and DDR (Double Data Rate) clocking conventions governing how data is clocked into the odd and even FIFOs of Figure 3a;
Figures 4a, 4b and 4c are schematic format diagrams for RGB, RGBA and YUV (422) input data streams, respectively, showing how different data input stream formats are handled by the SDR and DDR modes of operation of Figure 3b;
Figures 5a, 5b and 5c are tables for RGB, RGBA and YUV (422) 8-bit and 16-bit input data streams, respectively, showing the different data transfer rates that can be achieved with the SDR and DDR modes of operation of Figure 3b;
Figure 6 is a schematic block diagram showing the data input streams which are provided to the DMA controller of Figure 2 from all of its input data ports;
Figure 7 is a schematic block diagram showing how data input streams are distributed from the input data ports to each of the DMA channels of Figure 2;
Figure 8 is a schematic block diagram showing the processing elements within a single DMA channel of the input part of the interface shown in Figure 2;
Figure 9 is a schematic representation of a three-axis addressing process performed by a DMA channel of Figure 8 when storing input data in the SIMD data store of Figure 1;
Figure 10 is a table showing the parameter operating values of the streaming data input/output interface of Figure 1 according to the presently preferred embodiment of the invention;
Figure 11 a is a schematic format diagram showing three 8-bit data streams from one of the external data sources shown in Figure 1, the three data streams representing the R, G and B components of a single image;
Figure 11b is a table showing a set of register values for bundling the three data streams of Figure 11a into a single RGB image for storage within the SIMD data store of Figure 1;
Figure 11c is a schematic diagram showing the bundled data stored within the SIMD data store memory locations as achieved by the register values of Figure 11b;
Figure 12a is a schematic format diagram showing a single 16-bit multiplexed RGB input data stream, comprising four different images, from the other external data source shown in Figure 1;
Figure 12b is a table showing a set of register values for separating out the four images from the multiplexed data stream of Figure 12a and storing them in separate memory areas within the SIMD data store;
Figure 12c is a schematic diagram showing the separated data stored within the SIMD data store memory locations as achieved by the register values of Figure 12b;
Figure 13 is a schematic block diagram showing the output part of the streaming data input/output interface of Figure 1 in more detail, the output part comprising a plurality of data output ports and DMA channels;
Figure 14 is a schematic block diagram showing how data from the SIMD data store can be processed by any of the DMA channels within the output part of the interface and thereafter provided to any of the output data ports;
Figure 15 is a schematic block diagram showing the processing elements within a single DMA channel of the output part of the interface shown in Figure 13;
Figure 16 is a schematic block diagram showing all output streams from a DMA channel to the output data ports of the output interface of Figure 13; and
Figure 17 is a logical circuit diagram showing an output data port of the output part of the interface of Figure 2 in more detail, the output data port comprising a pair of odd and even FIFOs.

### Detailed Description of a Preferred Embodiment of the Present Invention

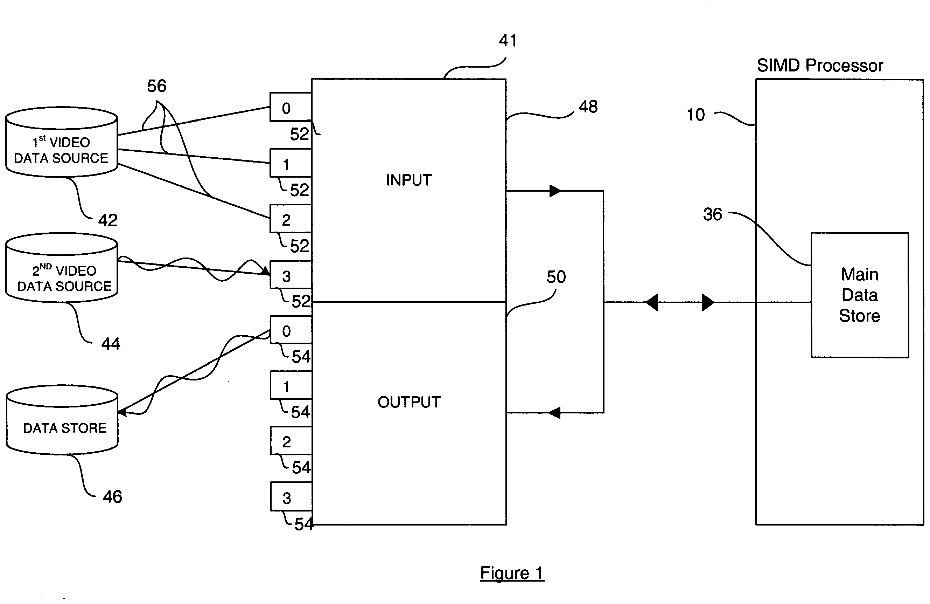

Referring now to Figure 1, there is shown a streaming data interface 41, which is connected to the main data store 36 of a SIMD processor 10 (the term 'SIMD data store' is used herein to refer to the main data store 36). As used herein, the term 'streaming data interface' is a direct data input/output interface. The streaming data interface 41 can be coupled in a variety of different ways to one or more data sources and one or more data stores (data sinks). In this embodiment, the streaming data interface 41 is shown connected to a first video data source 42 and a second video data source 44. The streaming data interface 41 is also connected to a single data store 46.

The streaming data interface 41 has an input part 48 (also referred to as the Direct Data Input DDI) and an output part 50 (also referred to as the Direct Data Output DDO), which respectively have four independent data input ports 52 and four independent data output ports 54. Each port is an individual 8-bit data port which allows a 400 MB/s data transfer. Accordingly, the combined maximum sustained data transfer rate in each direction is therefore 1.6 GB/s. Also the operation of each port 52, 54 is independent as each is individually configurable.

As can be seen clearly from Figure 1, the first video data source 42 is arranged to supply three data streams 56 to the input ports '0', '1' and '2' of the interface 41, each data stream 56 providing data regarding a single component of the composite video data, for example a colour component of a composite colour signal. The second video data source 44 is arranged to provide a single data stream to input port '3' of the interface 41 where the data stream 58 is a multiplexed multiple-component composite video data signal.

Similarly, it can be seen that the output port '0' of the DDO 50 provides a multiplexed composite video data stream 60 to the data store 46.

The input and output sides 48, 50 of the interface 41 have been conceived to offer the greatest possible flexibility with the minimum of I-O overhead, allowing several devices to be connected to the same data source or sink, or for pipelining from DDO output of one device to DDI input of the next. Accordingly, whilst Figure 1 shows two data sources 42, 44 and a single data sink 46, these may be data memories of other SIMD processors 10 (not shown) for example.

The interface 41 is intended to allow logical ports to be allocated to the physical ports 52, 54 in a highly flexible manner. The interface 41 can be programmed to handle the streams of data 56, 58, 60 independently on one or more of the available ports 52, 54, or the interface 41 can be programmed to make them interact, following a set sequence. This level of programmability allows, for example, several data streams 56 arriving at different input ports 52 to be combined and stored in a single area of memory, or a multiplexed stream 58 arriving at one input port 52 to be de-multiplexed into several areas.

A non-exhaustive list of examples of the configurations of input and output data that can be handled by the interface 41 of the present embodiment is given below:
- An interleaved single data stream having four different components, which can be separated into four data streams for storage in up to four different memory blocks.
- A data stream having even and odd data components, with the even data in a received sequence going into a first memory block and the odd data in the received sequence going into a second data block.
- Multiple streams of different types of data being combined into a single stream of data for storage into a single memory location (or a single set of contiguous memory locations).

The four data input ports 52 allow up to four data streams to be captured at the same time, for example handling a standard video signal format RGBA (Red, Green, Blue, Alpha), with 8-bit or 16-bit data. In the present embodiment illustrated in Figure 1, three 8-bit data streams 56 representing R, G and B components (samples) of an image enter the DDI 48 at input ports 0, 1 and 2, whilst a single 16-bit multiplexed RGB input stream 58 enters the DDI 48 only on input port 3.

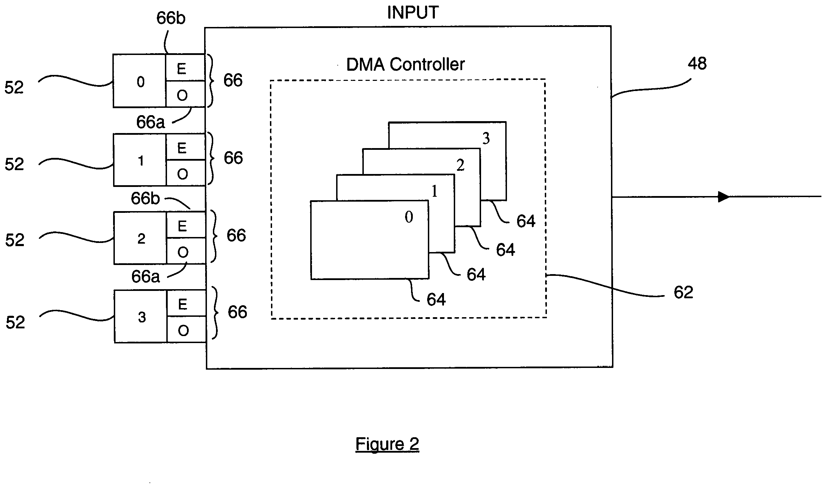

The configuration of the DDI 48 is shown in more detail in Figure 2. At the heart of the DDI 48 is an n-channel DMA controller 62. In the present embodiment, the DMA controller 62 comprises four independent data channels 64, namely 'n' in this embodiment is set at four, this being the number of logical data streams that the interface 41 is designed to handle because it covers many typical video data formats (e.g. four streams for RGBA, CMYK (Cyan, Magenta, Yellow, Key) etc). Each channel 64 of the DMA controller 62 has access to all incoming data streams but only acts upon a selected data stream 56, 58 entering the interface 41 through a DDI port 52. This is described in greater detail later.

In the current embodiment, the physical interface 41 exploits a SDR (Single Data Rate) and a DDR (Double Data Rate) data clocking convention to maximize the utilization of the external pins of the device. In order to implement this, in each data port 52, data is presented to two 8-bit FIFOs 66, an Odd FIFO 66a and an Even FIFO 66b. These FIFOs 66 serve to isolate the clock domains between the external data and the SIMD processor 10.

Each port 52 can be individually configured in either a single data rate (SDR) or a double data rate mode (DDR); with up to 8 or 16 bits being accepted on each port 52 in one clock cycle using these signalling protocols, with the double data rate mode being necessary to achieve the maximum throughput.

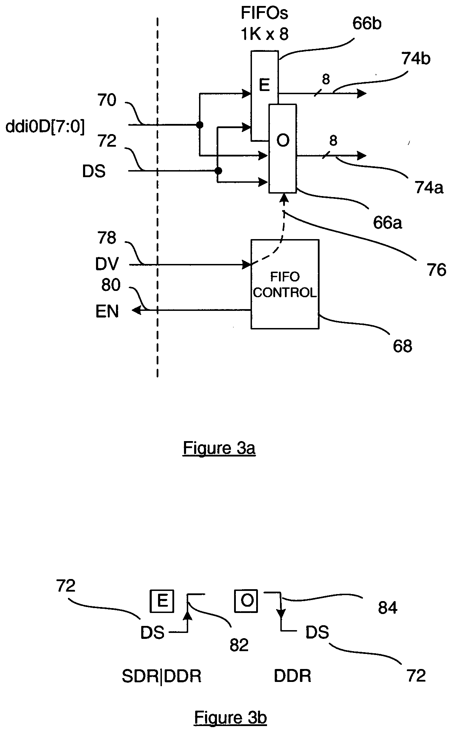

The architecture of the DDI ports 52 is now described in greater detail with reference to Figure 3a, where the components of 8-bit input port '0' 52 are shown. (It is to be noted that all of the input ports 52 have the same components and so description of one enables the construction and operation all of them to be understood).

The DDI port 52 has three components, the odd FIFO 66a, the even FIFO 66b mentioned above and a FIFO control unit 68. Each FIFO 66a, 66b is connected to the 8-bit data input bus 70 which for DDI port '0' is the input stream 56. In addition, a data strobe (DS) control signal 72 of the data input bus 70 is supplied to each FIFO as a clock signal. The outputs of the odd and even FIFOs respectively comprise the odd and even data input streams 74a, 74b within the streaming data interface, namely for the DMA controller channels 64.

The FIFO control unit 68 is provided to regulate the speed at which data is provided to the FIFOs from the data source 42, 44, because there are typically different rates of data input and data output from each FIFO. The FIFO control unit uses a handshaking protocol which only limits the input data rate when the FIFOs are at capacity. More specifically, the FIFO control unit 68 is coupled to both FIFOs at 76 and monitors the available space in both FIFOs. The FIFO control unit 68 provides an enable signal 80 if there is enough space to accept the next data byte and in return, a data valid (DV) input control signal 78 is received when new valid data has been placed on the data bus 70.

The operation of the DDI port 52 is now described in detail. The 8-bit DDI incoming data stream 70 enters through the ddi0D[7:0] bus. The data is clocked into the FIFOs 66a, 66b on the clock edges of the Data Strobe, DS 72. Data is captured in two modes: Single Data Rate (SDR) and Double Data Rate (DDR). The FIFO control unit 68 provides the enable input signal, EN, 80 to indicate space is available in the FIFO for data entry, with the handshake return Data Valid, DV, input signal 78.

The depth of the FIFOs is chosen to provide a suitable amount of buffer slack to absorb stalls or conflicts on internal memory resources, which might otherwise interrupt the stream. In this non-limiting embodiment, each FIFO has a depth of 1 KB, though in other applications a smaller or larger depth may be employed.

Referring now to Figure 3b, an explanation is provided of how SDR and DDR are achieved respectively using the even FIFO 66b and the even and the odd FIFOs 66b, 66a.

In SDR, data is clocked into only the even FIFO 66b on the rising edge 82 of the data strobe clock 72. This gives a maximum incoming data rate in this embodiment of 200MB/s.

In DDR, data is clocked alternately into the even and the odd FIFOs 66b, 66a, with data clocked into the even FIFO 66b on the rising edge 82 of the data strobe 72, and data clocked into the odd FIFO 66a on the falling edge 84 of data strobe 72. This gives a maximum incoming data rate, in this embodiment of 400MB/s.

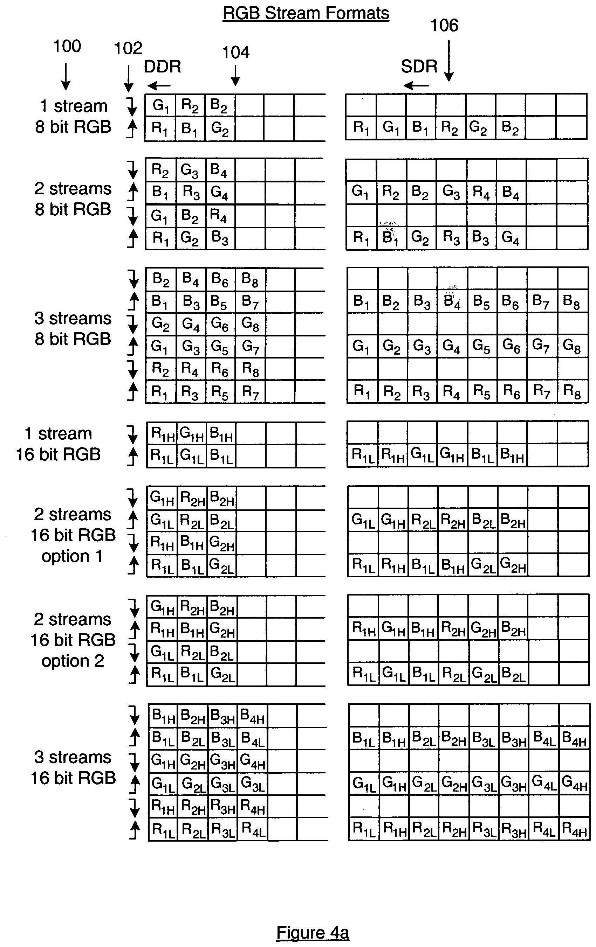

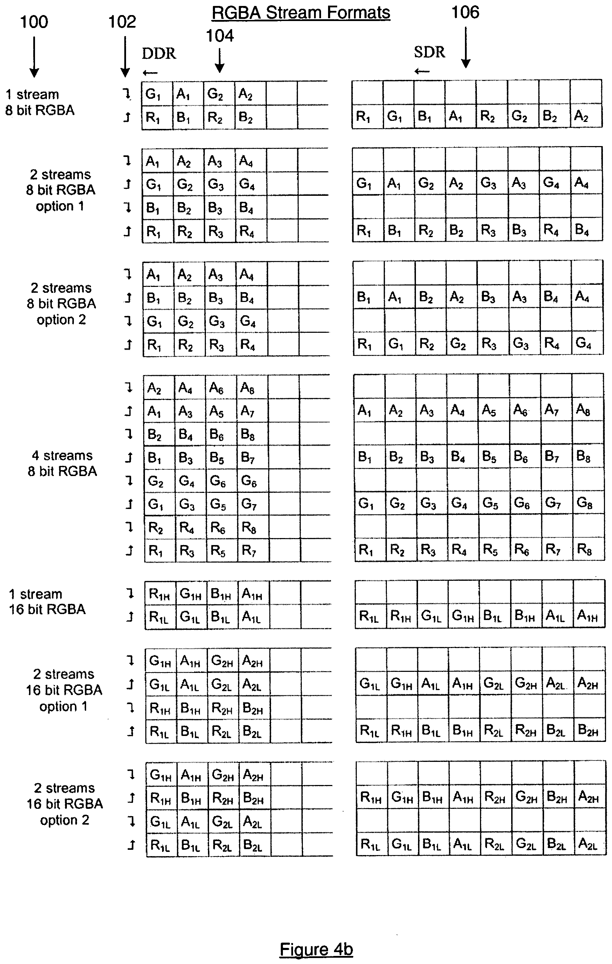

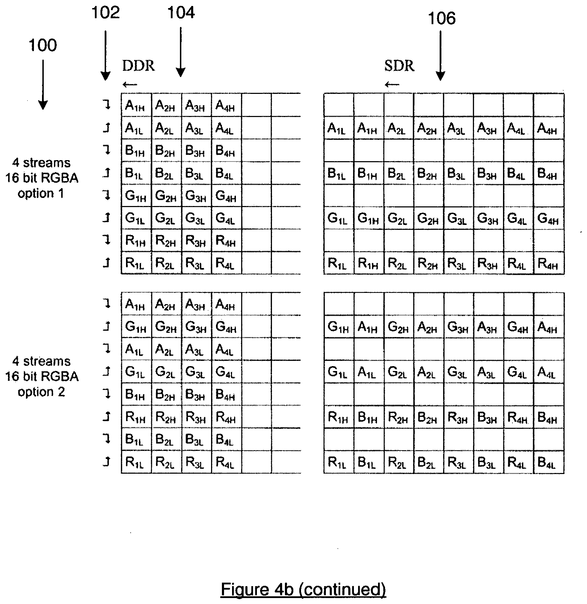

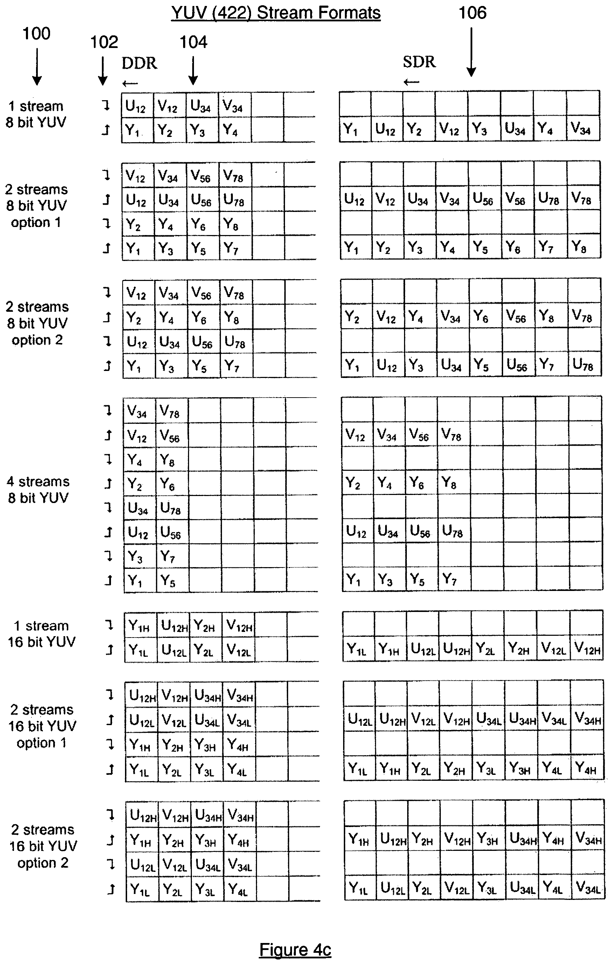

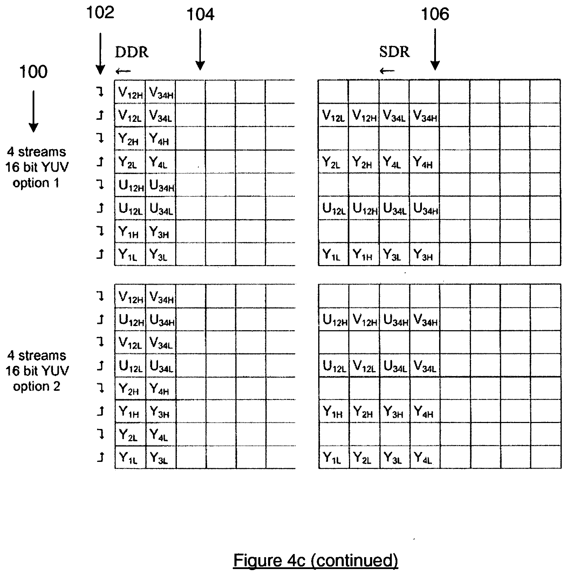

In order to better understand the details of how the streaming data interface 41 handles the input data received under different conditions, an explanation of the different formats and types of data which can be handled by the streaming data interface 41 is now described with reference to Figures 4a, 4b, 4c. These examples also serve to highlight the problem which the present embodiment solves of how to handle many different types of data input formats in a fast and efficient manner.

The streaming data interface 41 is arranged to handle incoming data streams 56, 58 in many different formats, for example video formats such as: Red-Green-Blue, commonly known by its acronym, RGB; Red-Green-Blue-Alpha, commonly known by its acronym, RGBA; and Luminance-Bandwidth-Chrominance, commonly known as YUV.

Figures 4a, 4b and 4c illustrate the types of image formats that are available, for RGB, RGBA and YUV, respectively and also show the stream-to-port allocation schemes which are used to handle this data input.

The first column 100 of each figure describes the configuration of the incoming data, namely the number of stream, the number of bits per sample, and the sample labels and order. Optionally, if there is a possibility for data within this description to be provided in slightly different formats, option numbers are provided for distinguishing between these different formats. The second column 102 of each figure indicates a rising edge 82 or a falling edge 84 and acts as a column identifier in the graphical data representation provided in a DDR column 104 and a SDR column 106.

The DDR column 104 illustrates in a grid the pattern of the input data. A pair of rows are provided per stream, the first row in the pair showing the sequence of input data samples which is clocked into the odd FIFO 66a, and the second row in each pair showing the sequence of input data samples which is clocked into the even FIFO 66b. Each box represents an 8-bit data sample and is labelled with the type of sample it is and its sequence in the data input stream (as a subscript). In the case of 16-bit data components and additional subscript of H (High) or L (Low) is provided to indicate which 8-bits are being referred to.

As is evident from looking at the examples provided, the DDR column 104 shows how for DDR both the odd and even FIFOs 66a, 66b are always utilised. The SDR column 106 also illustrates in a grid the pattern of the input data in the same manner as the DDR column. As is evident from looking at the examples provided, the SDR column 106 shows how for SDR only, the even FIFO 66b is always utilised.

The number of streams 56, 58 in each configuration of the incoming data, defines the number of logical input 'ports' deployed for the streaming transfer. Up to 8 or 16 bits can be accepted on each port 52 in one clock cycle, using DDR (Double Data Rate) or SDR (Single Data Rate) signalling protocols.

Although the examples shown in Figures 4a, 4b and 4c represent common video data formats and likely input-output scenarios, they are only indicative. Other formats and data alignment/packing solutions are possible.

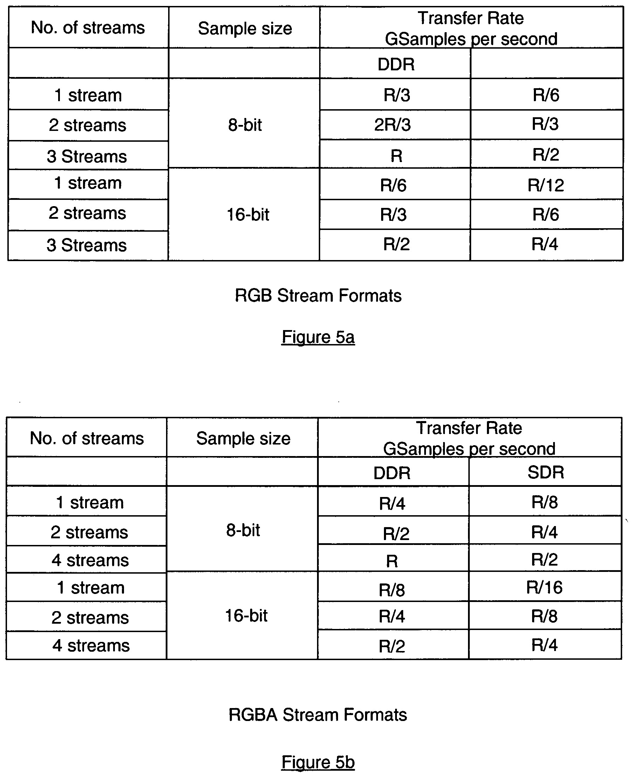

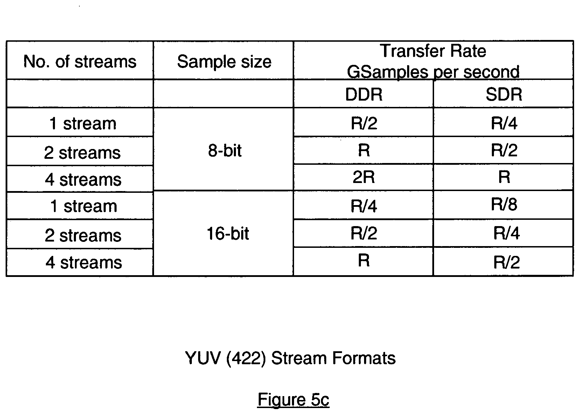

Figures 5a, 5b and 5c respectively show transfer rate tables for the streaming data interface 41 handling each of the formats shown in Figures 4a, 4b and 4c.

More specifically, each table shows different data transfer rates that can be achieved for the different types of input data using SDR and DDR. The number of streams is the number of logical 'ports' deployed for the streaming transfer. 'R' denotes the double data or 'edge' rate, namely twice the frequency of the data strobe DS 72.

In configuring the streaming data interface 41, a mode of operation can be selected (either SDR or DDR) dependent on desired transfer rate to be achieved.

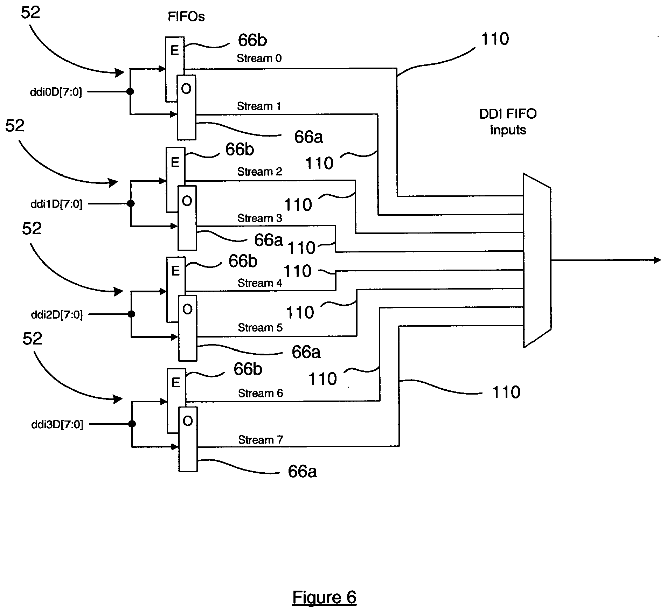

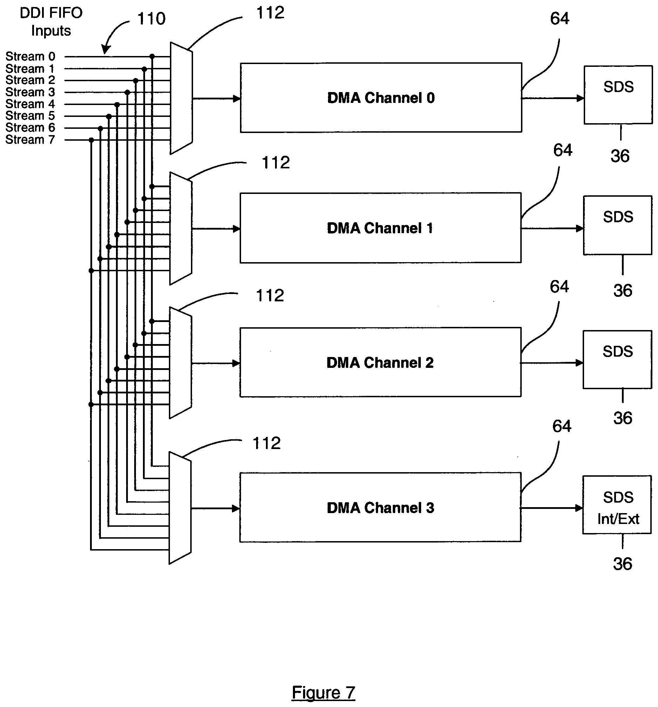

Referring now to Figure 6, the way in which the different internal data streams are generated is shown. Each physical input port 52 has a pair of odd and even FIFOs 66a, 66b which in turn each generate a data stream 110. The generated data streams 110 are made available as inputs to each of the DMA channels as described in Figure 7.

In the current embodiment, there are eight possible internal data streams 110 (labelled Stream 0 to Stream 7) for the streaming data interface 41, i.e. four physical ports each with Odd and Even FIFO data stream sources. If a port 52, 54 is to operate in the DDR mode then data is fed in through both the even and odd FIFOs 66a, 66b; otherwise if the SDR mode is required, then only the even FIFO 66b is be employed.

So, for the input examples provided in Figure 1: (i) the three 8-bit RGB data streams 56 entering data input ports 0, 1 and 2 52 will be received in SDR mode, with a byte captured on each rising strobe edge 82; and (ii) the single 16-bit multiplexed RGB input stream 58 entering port 3 will be received in DDR mode, with 8-bits being captured on each strobe edge 82, 84.

Figure 7 illustrates, in detail, how input data from all eight possible input streams 110 is distributed to all of the n DMA processing channels (n=4 in this embodiment).

In this embodiment, the internal data streams 110 are passed to all four independent DMA Channels 64 in the DDI Interface 41 via an input buffer 112 for each channel DMA 64. This is an important feature that provides the internal adaptable relationship of the streaming data interface structure. This configuration provides the maximum flexibility in handling an incoming data stream 110, being able to bundle (pass the data stream 110 in the incoming data sequence into the SIMD data store 36) or splitting (passing each component of a multiplexed incoming data stream 58 into independent sequences in the SIMD data store 36), for up to four data components with up to 8 bytes of data per item. The streams 110 are generated from all four DDI ports 52.

The DMA Channels 64 themselves can be configured to act only on specific parts of the data to which they are exposed. For example, the channel can be configured to blank out certain bits of an input signal or blank out elements in a sequence of bytes presented at the input buffer 112. For example channel 1 can be configured to act when a predefined data input is present at its buffer 112. This flexibility enables each DMA channel to effect a selected sampling procedure, namely a flexible data "cherry-picking' concept.

The structure and general operation of each DMA Channel 64 is now described in detail. This will be followed by worked examples for the two different data input streams 56, 58 shown in Figure 1 (namely 3 x single RGB streams 56 and 1 x multiplexed RGB stream 58).

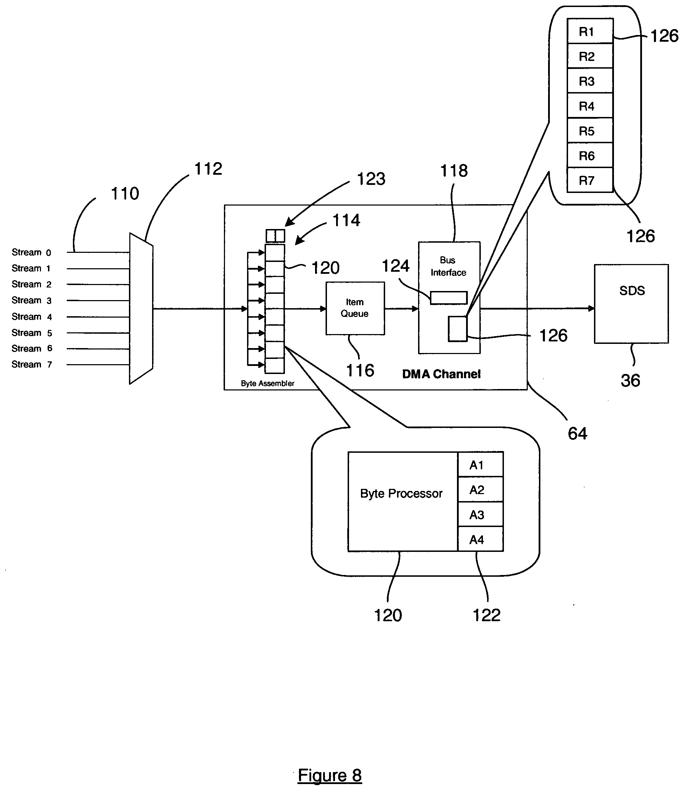

Referring now to Figure 8, a DMA channel 64 is described in greater detail. Only one DMA channel 64 is described, as the other DMA channels 64 are identical in structure and configurability.

A DMA Channel 64 comprises a Byte Assembler 114 for assembling received bytes into data words of a configurable size, an Item Queue 116 for buffering the assembled data words to a Bus Interface/Arbiter 118 which provides the address for the data words to be placed into the SIMD data store 36.

For DDI transfers, the DMA channel 64 must first assemble a data item from the input ports 52 using the byte assembler 114, and then pass it to the data memory arbiter 118 for controlling storage to the SIMD data store 36. Once a full Data Length parameter value (described later) has been assembled, the data sent to the item queue 116 and queued to the Memory Bus Arbiter 118 which generates the memory addresses for the data. The compiled data is then sent to the SIMD data store 36.

Looking at the structure of the DMA channel 64 and its operation in more detail, from the FIFO output, the data streams 110 pass via the input buffer 112 to the Byte Assembler 114, which under local program control (described later), assembles the 8-bit data into 8, 16, 24, 32, 40, 48, 56, or 64-bit data values as desired. The Byte Assembler 114 encompasses eight byte processors 120, the number of processors 120 used corresponds to the number of bytes in the largest possible data word size (e.g. eight byte processors 120 to handle a 64-bit maximum data word). Each byte processor 120 is configured under local program control only to capture (assemble) the incoming data after the preceding byte on the target data input stream 110 has been captured.

Each byte processor 120 has an associated set of assembly registers 122, which are used to configure the operation of the associated byte processor 120. This configuration provides the local program control mentioned earlier. These registers are described in detail later.

Each DMA channel 64 can process 8, 16, 24, 32, 40, 48, 56 or 64-bit data item sizes, according to a programmable selection which is determined by parameters loaded into the assembly registers 122. It is possible - for example - to simultaneously capture a byte of data from each of the eight available FIFOs in a single cycle (for a 64 bit item).

The bus interface/arbiter 118 comprises local processor 124 and a set of seven programmable address registers 126 (which are described in detail later). The processor 124 carries out address calculation using the parameters stored locally in the address registers 126.

The byte assembler 114 carries out data word assembly in real time using the locally stored parameters. The bus interface 118 performs calculations of where to store/send data in real-time.

The key to the flexibility of the operation of the interface 41 is the behaviour of the byte assemblers 114. As stated, each DMA channel 64 has a byte assembler 114, each assembler 114 having eight byte processors 120 with their own set of assembly registers 122 to control the data assembly. Using the assembly registers 122, the byte processors 120 can be configured to work in accordance with the known characteristics of the incoming data streams 110, so that ultimately the data streams 110 can be stored as desired. For a single byte processor 120, the parameters stored in the assembly registers 122 are:
- *Follow Channel (for determining the byte assembler that consumes the preceding byte on the target data input stream)*
- *Follow Byte* (for determining the byte processor that consumes the preceding byte on the target data input stream)
- *First Stream* (for determining the initial target data input stream for the input byte)
- *Start Blocked* (1 bit - see below)

These assembly registers 122 are shown respectively as registers A1 to A4 in Figure 8.

The assembly registers 122 tell the corresponding byte processor 120 its place in the data consumption sequence. The byte processor tracks which of the 32 byte processors (four channels, each with eight byte processors) of the interface 41 are active in the current cycle, and when a match is made with the *Follow Channel* and *Follow Byte* parameters, it is enabled for the following cycle. That is, each byte processor 120 is activated when it is set to follow another byte processor and that previous byte processor has already consumed the preceding byte in the target data input stream 110.

If the parameter *Start Blocked* is false, the byte processor 120 is activated as soon as the channel is enabled and data is available in the target data input stream 110, without waiting for another byte processor to go first. The target data input stream 110 for the first byte read is given by the *First Stream* parameter. A byte processor 114 can be set to run continuously by setting the *Follow Channel* and *Follow Byte* parameters in the corresponding assembly registers 122 to its own location and setting the *Start Blocked* parameter to false. It will therefore be enabled immediately for the first transfer, with this first transfer triggering another one, and so on.

The byte assembler 114 also comprises two global or shared registers 123, which hold the global parameters *Stream Mask* and *Stream Increment.* These parameters are stored in shared registers as they affect the operation of all of the byte processors 120 in a given byte assembler 114.

After each byte transfer, the byte processor 120 updates its target data input stream using the global parameters *Stream Mask* and *Stream Increment,* by adding *Stream Increment* to the current target data input stream number but only updating the bits flagged in *Stream Mask,* i.e. the target stream number is incremented using offset modulo-N arithmetic, where N is determined by *Stream Mask.*

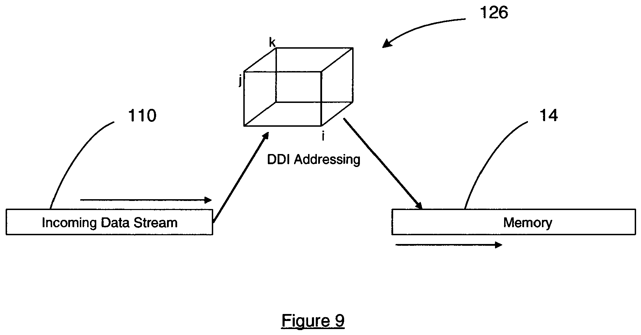

Referring now to Figure 9, the operation of the bus/arbiter interface 118 is now described in greater detail. The bus arbiter 118 provides a key improvement of the prior art in that each channel is able to instruct directly where the correctly assembled data is to be stored. Data addresses for storage are accessed directly rather than sequentially.

As has been shown in Figure 8 and mentioned above, the bus interface 118 is provided with seven programmable address registers 126 which can be set by the user in accordance with the characteristics of the incoming/outgoing data. These registers configure the bus interface to generate a set of data addresses for performing a particular storage process, so that the data addresses for storage are accessed directly rather than sequentially. The bus interface 118 performs address calculations of where to store/send data in real time.

Each DMA channel 64 is required to have the capability of writing the assembled data stream into any defined region of the SIMD data store 36. The current embodiment exploits a three-axis solution to offer flexibility for generation of address sequences for writing 1D, 2D and 3D data sets. The bus interface 118 is provided with a set of channel-wide registers 126 (shown as R1 to R7 in Figure 8) that dictate the destination data location, as well as the 'shape' of the transfer. There are three shape dimensions, labelled in Figure 9 as I, J and K.

The seven registers R1 to R7 are defined as follows:

| | |
|---|---|
| *iLength* | The number of data items per I-loop (16 bits). |
| *jLength* | The number of I-loops per J-loop (16 bits). |
| *kLength* | The number of J-loops per K-loop (16 bits). |
| *sdsIstep* | The address increment after each data item (32 bits) |
| *sdsJstep* | The address increment at each I-loop wrap (32 bits). |
| *sdsKstep* | The address increment at each J-loop wrap (32 bits). |
| *sdsBaseOffset* | The start / base address pointer (32 bits). |

An address register for each dimension is initialised with the base address, then incremented by its Step value with each increment in its loop counter. For example, a sequence with i/j/kLength all 2, and sdsIstep = 1, sdsJstep = 4, sdsKstep = 1000 and a base address of 0000 would have an address sequence as follows:
0000, 0001, 0004, 0005, 1000, 1001, 1004, 1005

Each DMA channel 64 has the ability to be configured in different ways to facilitate controlled but flexible data transfer to the SIMD data store 36. The different ways in which the DMA channel 64 can operate to achieve different data transfer functions is set out below. It is to be appreciated that the different functions typically rely on the setting of additional data registers in the bus interface 118, and whilst such additional registers are not shown in Figure 8, they are all considered to be present.

Each DDI DMA channel 64 incorporates a feature to combine multiple whole data items into a single larger (e.g. 64-bit) item before writing to the SIMD data store 36. This feature is significant considering the nature of modern SDRAM external memory, which potentially has a significant addressing overhead per item transferred. Therefore, if a number of smaller items (e.g. bytes) are intended to be stored into consecutive byte addresses, then it is more effective to group them and write them into RAM in a single 'atomic' cycle - incurring a single address overhead - rather than a sequence of individual byte writes.

Eight 8-bit items could, for example, be packed into a single 64-bit item if their store addresses are consecutive. If, for example, the SIMD data store data bus width is 32 bits, this allows them to be stored as two 32-bit words, a saving of six memory accesses.

Each DMA channel 64 has a dedicated control and status register (not shown). Setting a *Transfer Request* flag (not shown) begins a DMA transfer to the SIMD data store 36. When a transfer is finished, the DMA channel 64 sets a *Transfer Complete* flag in the *status* register.

When multiple DMA channels 64 are programmed to interact, it is important that they start together and remain in synchronisation for the duration of the transfer, to avoid any data loss or unnecessary stalling. To assist with this process, each DMA channel 64 has a *Channel Dependency* register (not shown), indicating which of the channels are linked during a transfer. Once a transfer is requested, the DMA channel 64 stalls until transfer requests have been programmed for all of the linked DMA channels 64 and their *Transfer Request* flags have all been set. All of these channels then begin their data transfers to the SIMD data store 36 simultaneously.

A round-robin priority system is used to arbitrate if multiple channels 64 attempt a memory access at the same time. A configuration register (not shown) sets the maximum number of consecutive accesses allowed before a DMA channel 64 loses its priority status.

Each DMA includes a burst buffer (not shown) to compensate for variations in memory access latency. Configuration registers (not shown) define fullness thresholds for these buffers, beyond which a memory access is allowed.

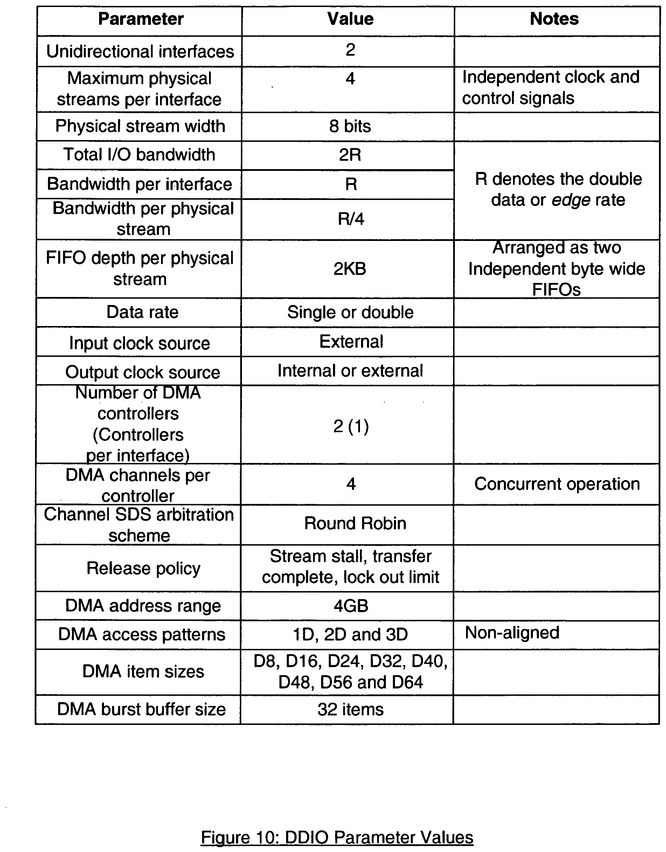

A summary of all of the operating parameters available for the preferred embodiment to control the capabilities of the DDIO interface 41 is shown in the table of Figure 10. Whilst the functionality of the output part 50 of the interface 41 has not yet been described (set out later), it is in essence the same as the input part 48 in reverse. Accordingly, the parameters for both the input part 48 and the output part 50 have been set out in the table.

Having described internal workings of the input side of the a DMA channel 64 in detail, worked examples for the two different input examples will now be provided.

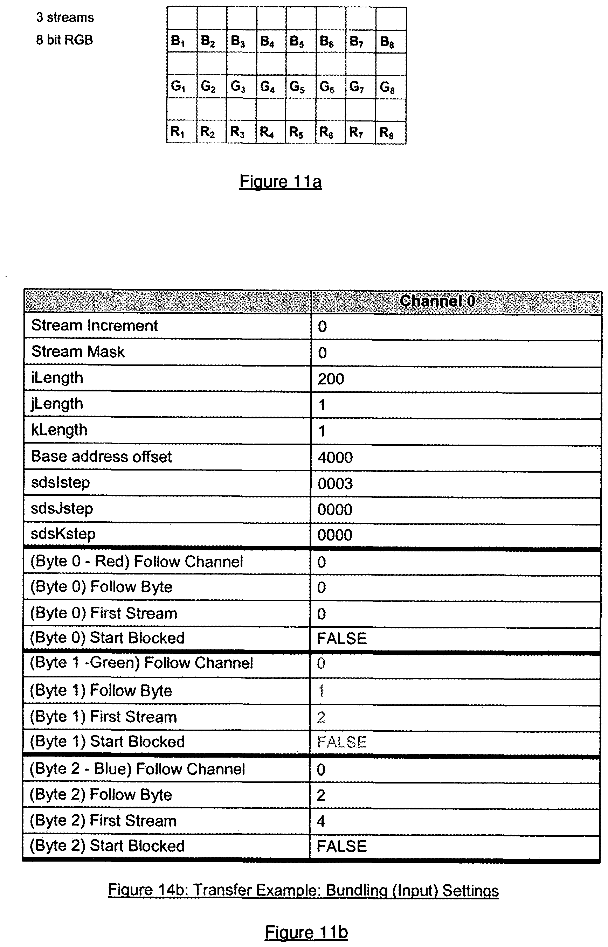

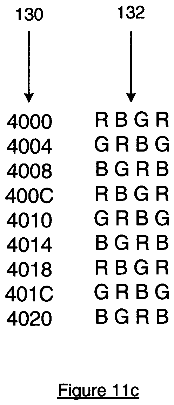

Figures 11a, 11b and 11c describe a bundling example in which a plurality of individual image data streams input into the interface 41 need to be bundled together and stored together as a composite data image in the SIMD data store 36.

More specifically, as already described with reference to Figure 1, three 8-bit data streams representing R, G and B components of an image have entered the DDI 48 at input ports 0, 1 and 2. The data streams 56, shown in Figure 11a, are required to be bundled and stored as a single RGB image in the SIMD data store 36. Note the same grid notation is used in Figure 11 as has been used and described earlier with respect to Figure 4a, 6b and 6c. Accordingly, it can be seen from Figure 11a that three channels are being used, each channel provides 8-bit samples of a single colour component, and a SDR is being employed.

The interface 41 is configured to use a single DDI DMA channel 64, to deliver the three inputs in SDR mode, with a byte captured on each rising strobe edge 82. The *Data Size* parameter is programmed for 24-bit mode, and the DMA channel 64 is configured to use three byte processors 120 to capture and process the incoming data from each port 52.

Figure 11b shows the values of the byte assembler registers 122, the shared registers 123 and the seven programmable address registers 126, which hold the parameters described above. More specifically, the DMA Channel register values (which include the assembly registers 122, the global registers 123, and the address registers 126) shown in Figure 11b apply for an image size of 200 pixels, with the image store starting at memory location 4000.

Data enters the DDI port 52 and is captured in three even input FIFOs 66b, with data valid on the rising strobe edge 82 stored in FIFOs generating data streams 0, 2 and 4. When the DMA channel is enabled, Channel 0 has three byte processors 120 that are immediately active (*Start Blocked* is false).
- Byte 0 captures data from even FIFO 0 (First Stream = 0)
- Byte 1 captures data from even FIFO 2 (First Stream = 2)
- Byte 2 captures data from even FIFO 4 (First Stream = 4).

The first DMA channel (Channel 0) now has a 24-bit item that it can store in memory at addresses 4000-4002. The byte processors 120 update their target data input streams (not shown) but in this case the parameter *Stream Increment* is 0, so the target streams remain unchanged. Channel 0 updates its target address by adding *sdsIstep* (0003) and increments its 'I' loop counter.

On the next cycle, all three byte processors are again active, as they are programmed to follow themselves (that is, Byte 0 *Follow Channel* = 0, *Follow Byte* = 0, Byte 1 *Follow Channel* = 0, *Follow Byte* = 1 and Byte 2 *Follow Channel* = 0, *Follow Byte* = 2).

The process continues until the 'I' loop counter reaches 200, at which point the transfer is complete. At this point the data 132 is stored in the SIMD data store 36 memory locations 130 in the manner shown in Figure 11c, where R represents 1 byte of Red data, B represents one byte of Blue data, and G represents one byte of Green data.

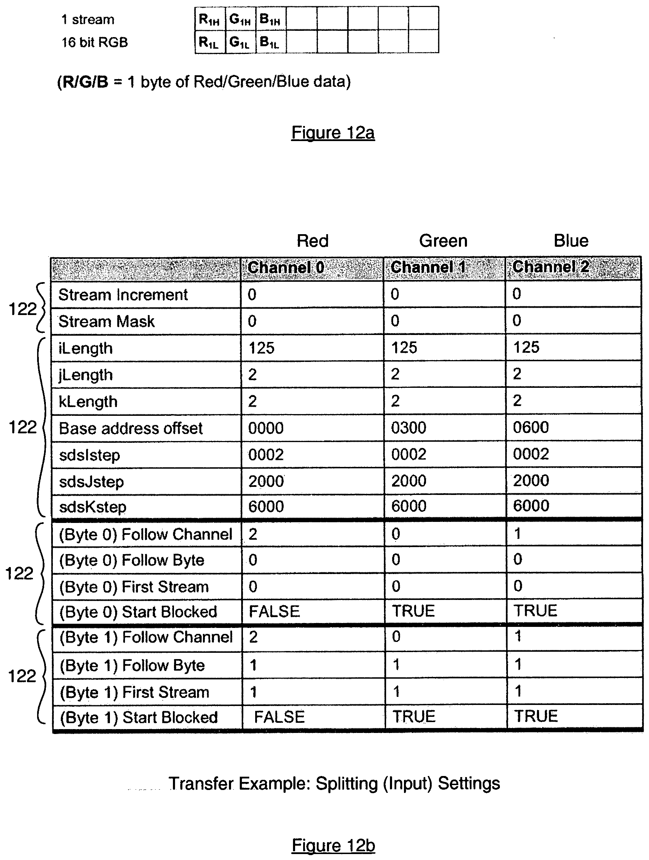

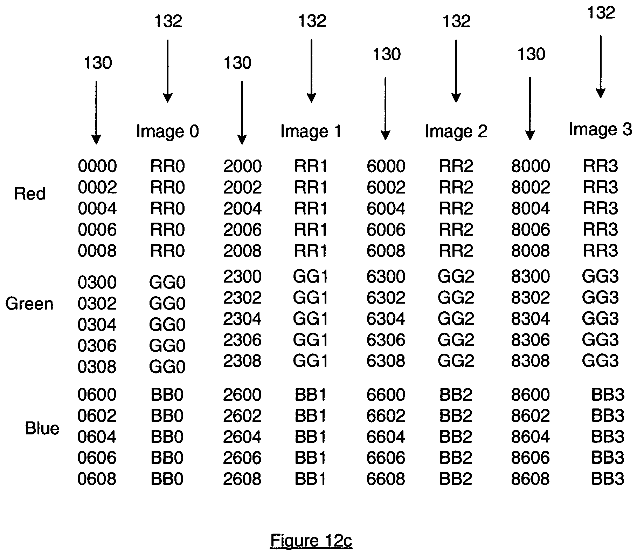

Figures 12a, 12b and 12c describe a splitting example in which a single multiplexed data stream 58 input into the interface 41 needs to be split and stored individually into separate areas of memory in the SIMD data store 36.

More specifically, this data input example is shown in Figure 1, where a single 16-bit multiplexed RGB input stream 58 enters the DDI only on input port 3 52. The input stream 58 is shown in Figure 12a. Note the same grid notation is used in Figure 12a as has been used and described earlier with respect to Figure 11a. Accordingly, it can be seen from Figure 11 a that one channel is being used, the channel provides 16-bit samples (two 8-bit samples) of a single colour component, and a DDR is being employed using odd and even FIFOs 66a, 66b.

Four images from the stream are to be captured and stored in separate areas of SDS memory. The four images are required to be de-multiplexed into their component planes.

The interface 41 is configured to use three DDI DMA channels 64 (Channel 0 for Red, Channel 1 for Green and Channel 2 for Blue) to achieve the splitting of the three colour planes. The *Data Size* parameter is programmed for 16-bit mode and each DMA channel 64 uses two byte processors 120 to capture the high and low byte samples and process the same.

The DMA Channel register values 122, 123, 126 shown in Figure 12b apply for an image size of 125 pixels, with the four image stores starting at memory locations 0000, 2000, 6000 and 8000. The R, G and B components will be stored at an address offset of 300. (In this example it is assumed that channel dependency and other required configuration settings have already been programmed, and data packing is off).

Data enters the DDI port 3 52 and is captured in two input FIFOs, with data valid on the rising strobe edge 82 stored in even FIFO0 66b and data captured on the falling edge strobe edge 84 stored in odd FIFO1 66a.

When the DMA channels 64 are enabled, Channel 0 has two byte processors 120 that are immediately active (*Start Blocked* is false).
- Byte 0 captures data from even FIFO 0 (*First Stream* = 0)
- Byte 1 captures data from odd FIFO 1 (*First Stream* = 1).

Channel 0 now has a 16-bit item that it can store in SDS memory at address 0000-0001. The byte processors 120 update their target data input streams (not shown) but in this case the parameter *Stream Increment* is 0, so the target streams remain unchanged. Channel 0 updates its target address by adding *sdsIstep* (0002) and increments its 'I' loop counter. Byte 0 and Byte 1 must now wait until Channel 2 becomes active (Follow Channel = 2).

Channel 1 byte processors 0 and 1 are triggered by the activity on Channel 0 (*Follow Channel* = 0). Byte 0 follows <Channel 0, Byte 0> and Byte 1 follows <Channel 0, Byte 1>. The next 16-bit item is captured from even FIFO 0 and odd FIFO 1, then stored at address 0300-0301. Address and loop counters are updated, and Channel 1 waits for the next activity on Channel 0.

On the next cycle Channel 2 is active (*Follow Channel* = 1). This time the 16-bit item will be stored at address 0600-0601.

The activity on Channel 2 triggers Channel 0 to become active on the next cycle, and the process repeats until all of the loop counters have completed. This will result in 125 samples of each colour component being transferred as representing the first image. At this stage all of the red samples are stored at memory locations 0000 to 0250, green samples at memory locations 0300 to 0550 and all of the Blue samples at memory locations 0600 to 0850.

The first image (Image 0) is complete when the 'I' loop counter wraps. At this point the base address for Channel 0 is set to 2000 and processing continues.

The first pair of images (Image 0 and Image 1) are complete when the J loop counter wraps. At this point the base address is set to 6000 and the processing continues.

At the end of the transfer, all four images have been transferred into the SIMD data store 36. At this point, the data 132 is stored in the SDS 36 memory locations 130 in the manner shown in Figure 12c, where RRx represents the two bytes of Red data for image x, GGx represents the two bytes of Green data for image x, BBx represents the two bytes of Blue data for image x. Here each of the images is separated and also the colour components are separated.

Both of the above-described examples are carried out in real time because of the way in which the interface is configured with control parameters being set in the DMA channel registers 122,123,126. Flexibility is also provided in that both very different examples can be handled by the same interface 41 with a simple change in the configuration parameters.

As has been mentioned previously, the output part 50 of the interface 41 is identical to the input port 48 of the interface 41 except for the fact that the components are arranged to handle a reversed flow of data from the SIMD data store 36 to the output data store 46 (data sink). Accordingly, much of what has been described above in relation to the DDI 48 also applies the DDO 50. However, the DDO 50 is described below.

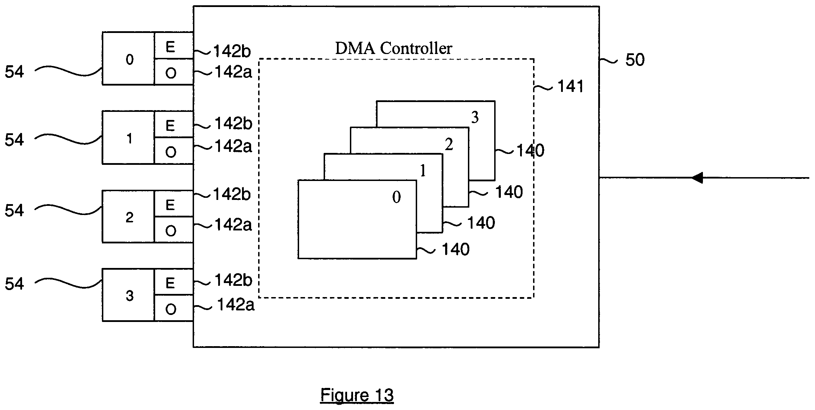

Referring now to Figure 13, the DDO (output part) 50 is presented in the same way as the DDI 48, but with the data passing in the opposite direction, from the SIMD data store 36 to the DDO ports 54. The DDO 50 is comprised of n-DMA Channels 140, which in turn make up an associated n-channel DMA controller 141. N in this embodiment is set at four, this being the number of logical data streams that the interface 41 is designed to handle because it covers many typical video data formats (e.g. four streams for RGBA, CMYK (Cyan, Magenta, Yellow, Key) etc). Each channel 140 of the DMA controller 141 has access to the SIMD data store 36 but only acts upon a selected data set from the SIMD data store 36. The four DMA channels 140 allow up to four streams to be output at the same time, for example RGBA, with 8-bit or 16-bit data. The outputs of the DMA channels 140 can be combined in many ways to achieve the desired output data stream 60 through the relevant DDO port 54. This is described in greater detail later.

The four data output ports 54 each have an Even FIFO 142b and an Odd FIFO 142a for implementing SDR (Single Data Rate) and DDR (Double Data Rate) clocking conventions, as have been described previously, to maximize the utilization of the external ports 54 of the interface 41. In order to implement this, in each data port 54, data from the DMA channel 140 is received at either one of an 8-bit Odd FIFO 142a, and an 8-bit Even FIFO 142b. These FIFOs 142a, 142b serve to isolate the clock domains between the SIMD array processor architecture and the external data sink 46. Up to 8 or 16 bits can be accepted on each port 52 in one clock cycle using these signalling protocols, with the DDR mode being necessary to achieve the maximum throughput.

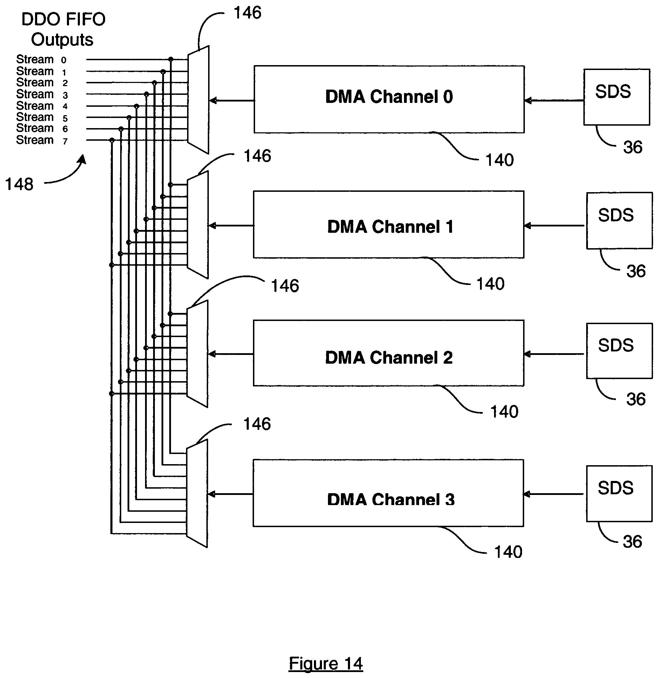

Figure 14 shows how data from the SIMD data store 36 passes through each DMA channel 140 to the output ports in more detail. More specifically, data being provided by each DMA channel 140 passes through a respective DMA channel buffer 146 and onto each one of the output FIFOs 142a, 142b. The eight odd and even output FIFOs 142a, 142b, provided at the output ports 54, are individually connected to eight data streams 148 labelled Data Streams 1 to 8.

This configuration provides the maximum flexibility in handling the outgoing data stream, being able to bundle (pass the data stream in outgoing sequence from the SIMD data store 36) or splitting (passing each component of a multiplexed outgoing data stream from the SIMD data store 36 into independent sequences), for up to four data components with up to 64 bits of data.

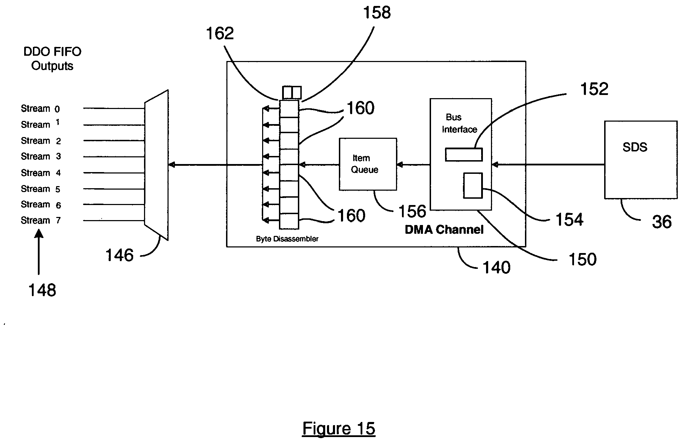

Referring now to Figure 15, the details of an output DMA channel 140 are now described in greater detail. A DMA Channel 140 comprises a bus interface/arbiter 150, which obtains the required data from the SIMD data store 36. The bus interface 150 is similar to the bus interface/arbiter 118 of the input part 48 of the interface 41 in that it comprises a processor 152 and a set seven programmable address registers 154 which can be set by the user in accordance with the characteristics of the data to be read from the SIMD data store 36. These registers 154 configure the bus interface 150 to perform a particular reading process, so that the SDS data addresses for data reading are accessed directly rather than sequentially. The bus interface 150 performs calculations of where to read/retrieve data from in the SIMD data store 36 in real time. This is carried out by the processor 152 rather than at a higher level by a compiled program, which makes the task of addressing data fetches from the SIMD data store 36 far quicker than in the prior art.

A DMA Channel 140 also comprises an Item Queue 156 for buffering the assembled data words to the Byte Disassembler 158, and then to the output FIFOs 142a, 142b which issue the data through the DDO ports 54. More specifically, a DDO transfer involves the DMA channel 140 first retrieving a data item from SDS storage then disassembling the data item to 8-bit segments, and then passing the data on to the selected output ports 54.

The set of seven programmable channel-wide address registers 154 (only shown as a set in Figure 15) dictate the source data location, as well as the 'shape' of the transfer. There are three shape dimensions, labelled here I, J and K and the resisters store the following parameters:

| | |
|---|---|
| iLength | The number of transfer bytes per I-loop (16 bits). |
| jLength | The number of I-loops per J-loop (16 bits). |
| kLength | The number of K-loops per transfer (16 bits). |
| sdslstep | The address increment after each byte (32 bits). |
| sdsJstep | The address increment at each I-loop wrap (32 bits). |
| sdsKstep | The address increment at each J-loop wrap (32 bits) |
| SdsBaseOffset | The start / base address pointer (32 bits). |

Further details on how the data is organised in memory have already been discussed with respect to the input side 48 of the interface 41.

If a *Packed Configuration* bit (not shown) is set in a DDO DMA channel 140, the DMA assumes that its source data exists in a packed format and unpacks the data as appropriate.

The Byte Disassembler 158, under program control, disassembles the 8, 16, 24, 32, 40, 48, 56, or 64-bit data values into 8-bit data. The Byte Disassembler 158 stage encompasses eight byte processors 160, the number of processors used corresponding to the *Data Size* parameter value. Each processor 160 is configured under program control to output only the data after the preceding byte has been output.

Each DMA channel 140 can process 8, 16, 24, 32, 40, 48, 56 or 64-bit data item sizes, according to its *Data Size* parameter setting. It is possible therefore to simultaneously output a byte of data to each of the eight available output FIFOs in a single cycle (for a 64-bit item).

Each of the eight 'byte' processors has its own set of four registers (disassembler registers, which are equivalent to the assembly registers 122 shown in Figure 8), to control the disassembly. For the single byte disassembler 158, the disassembler registers (not shown in Figure 15) hold the following parameters, which are again the same as for the input part 48 of the interface 41:
- *Follow Channel*
- *Follow Byte*
- *First Stream*
- *Start Blocked* (1 bit)

These disassembler registers tell the associated byte processor 160 its place in the data output sequence. The byte processor tracks which of the 32 byte processors (four channels, each with eight byte processors) are active in the current cycle, and, when a match is made with the *Follow Channel* and *Follow Byte* values, it is enabled for the following cycle.

If its *Start Blocked* parameter is false, the byte processor 160 may transfer its first byte as soon as the channel is enabled and data is available, without waiting for another byte processor to output a byte first. The target data output stream 148 for the first byte written for DDO is given by the *First Stream* parameter.

A byte processor 160 can be set to run continuously by setting its *Follow Channel* and *Follow Byte* parameters to its own location and setting its *Start Blocked* parameter to false. It is therefore enabled immediately for the first transfer, with this first transfer triggering another one, and so on.

The byte disassembler 158 also comprises two global or shared registers 162, which hold the global parameters *Stream Mask* and *Stream Increment.* These parameters are stored in shared registers 162 as they affect the output operation of all of the byte processors 160 in the byte disassembler 158.

After each byte transfer, the byte processor 160 updates its target data output stream using the global parameters *Stream Mask* and *Stream Increment,* by adding *Stream Increment* to the current target data output stream number but only updating the bits flagged in *Stream Mask,* i.e. the target stream number is incremented using offset modulo-N arithmetic, where N is determined by *Stream Mask.*

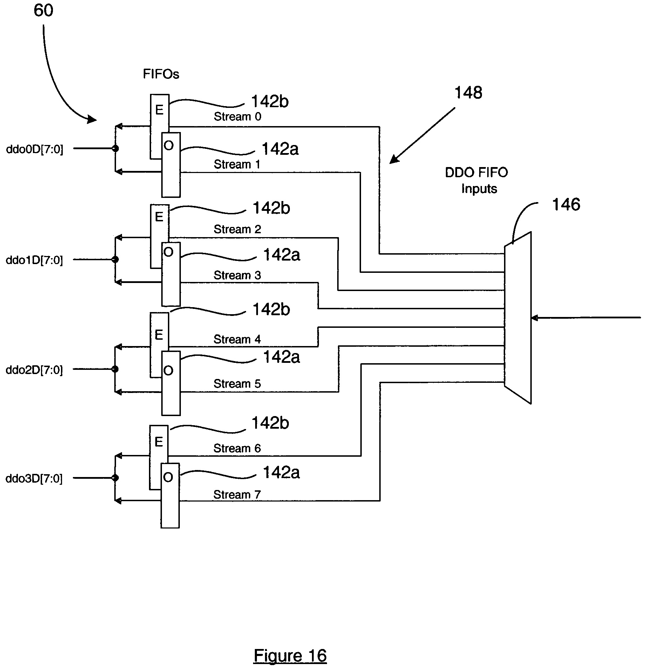

The data output streams 148 (Streams 1 to 8) generated by the DMA channels 140, connect to individual even and odd FIFOs 142b, 142a at the output ports 54 as shown in Figure 16. Streams are paired together at the physical output ports 54 and in the case of Streams 1 and 2, the combined data is provided to output port 0 to provide the multiplexed composite video data stream 60 to the data store 46.

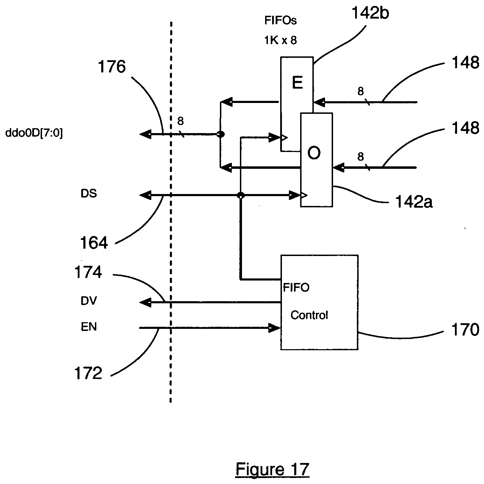

The transfer mechanism at the output port 54 is now described in greater detail with reference to Figure 17.

Generally, once the full *Data Size* parameter value has been disassembled, the 8-bit DDO outgoing data stream 148 is presented to one of the two 1K deep x 8-bit FIFOs, Odd and Even 142a, 142b. These serve to isolate the clock domains between the core logic and the external data receiver 46. The data is clocked out of the FIFOs on the clock edges of the Data Strobe, DS, line 164, which is generated by the FIFO control unit 170. This unit 170 also accepts an Enable input signal, EN 172, with a handshake return Data Valid, DV, output signal 174. The 8-bit data 176 exits the device through the ddoXD[7:0] ports (where X = 0 to 3).

More specifically, the FIFO Control unit 170 is connected to the parallel port data strobe (DS) 164 and data valid (DV) 174 output and the enable (EN) 172 and clock (CLK) input (not shown) signals. The internal clock for the unit 170 can be selected to be the port clock or an internal (device) clock.

The output interface 50 is enabled by the EN signal 174. There is a delay of several clocks between a change of EN signal 174 and the enabling or disabling of the interface 41. When the interface 41 is enabled, then on each internal clock, if data is available from the FIFOs 142a, 142b it is output on the data output (DO) bus 176 via a Data Rate Converter block (not shown), DS 164 is pulsed and DV 174 is asserted.

If data is not available then a null value is output, DV 174 is negated and DS 164 may or may not be pulsed, as follows. When DV 174 is negated, additional DS 164 pulses are generated to clock internal logic at the destination. The number of additional pulses is programmed via an additional PCI configuration register (not shown) to be 0, 1, 2 or infinite. In the last case, DS (164) will be free running from power up.

When the interface is disabled, DO 176 is set to a null value, DV 174 is negated and pulsing of DS 164 may stop. If the number of additional DS 164 pulses is not programmed to be infinite, the DO 176, DV 174 and DS 164 pins are also tri-stated, once the last DS 164 pulse has been generated.

When operating in double data rate (DDR) mode, a data byte from the even FIFO 142b is output on the rising edge 82 of the output clock and from the odd FIFO 142a on the falling edge 84 (see Figure 3b).

When operating in single data rate (SDR) mode, a data byte from the even FIFO 142b is output each clock cycle and nothing is taken from the odd FIFO 142a. An additional configuration register (not shown) defines the port's data rate.

As has been mentioned previously, it is to be appreciated that the input part 48 and the output part 50 of interface 41 are very similar in construction and operation, the difference being in the flow of data into or out of the SIMD data store 36 connected to the interface. Accordingly, in the descriptions provided above of the DDO 50 a detailed description of features described adequately regarding the DDI 48 of the interface are omitted, but these features are nonetheless to be considered present in the DDO 50.

The examples described with reference to Figures 11a, 11b, 11c of input data bundling and Figures 12a, 12b, and 12c, which relate to data input splitting, can also be used to illustrate data output splitting (Figures 11a, 11b, 11c) and data output bundling (Figures 12a, 12b, 12c) respectively. In these cases, the data configurations would be the same and the parameters for configuration of the interface would also be the same but the process would be carried out in reverse.

For example, rather than using video data having three or four components, different types of data can be handled by the interface and be manipulated in a programmable way to result in high-speed data transfer into and out of the SIMD data store.

It will also be apparent to the skilled person that the disclosure also extends to specific classes of SIMD processors, including the ASP (Associative String Processor), which has been developed by the applicant to provide a high-performance parallel processing architecture by exploiting the natural parallelism found in many applications, such that thousands of data items can be simultaneously processed on each clock cycle. The hierarchy of an ASP comprises a tertiary memory which acts as a conventional memory and is coupled in turn to a secondary data store, a primary data store and finally a data-parallel processor. It is noted that the secondary data store in an ASP would equate to the SIMD data store 36 described above.

## Claims

1. A programmable, high-speed data input interface for inputting one or more data streams (110) received in a first format into a data store (36), of a parallel processing architecture, in a second format, the interface comprising:
at least one direct memory access channel (64) for controlling the conversion of the data received from the one or more data streams (110) in the first format into the second format, the at least one direct memory access channel (64) comprises a byte assembler (114) having a plurality of locally configurable data processors (120) for controlling the selection of bytes of data from the one or more received data streams (110); and wherein
each one of the plurality of data processors (120) comprises a set of local registers (122) storing data byte selection parameters for configuring the operation of the corresponding processor (120), including a register for storing an initial data input selection parameter for determining the initial data input for the processor, a register for storing an initial byte processing parameter for determining whether the first byte is to be processed, and a register for storing a data position selection parameter for determining the relative position of the data input within a constructable composite data word, to enable conversion of the received data stream for storage in the second format.

2. An input interface according to Claim 1, wherein the set of local registers (122) stores a channel selection parameter for determining the direct memory access channel to be used for creating a composite data word.

3. An input interface according to Claims 1 or 2, wherein the plurality of locally configurable processors (120) comprise at least one shared register (123) storing one or two global operational parameters for controlling the operation of all of the plurality of locally configurable processors (120).

4. An input interface according to Claim 3, wherein the at least one shared register (123) stores a local data input masking parameter, or wherein the at least one shared register stores a local data input selection parameter.

5. An input interface according to Claims 3 or 4, wherein the global operational parameters and the data byte selection parameters are selected to demultiplex a received multiplexed data stream.

6. An input interface according to Claims 3 or 4, wherein the global operational parameters and the data byte selection parameters are selected to assemble together a plurality of received data streams.

7. An input interface according to any preceding claim, wherein the byte assembler (114) is configurable with a data size parameter for determining the size of the compiled data word.

8. An input interface according to any preceding claim, wherein the interface comprises a locally configurable address generator (118) for generating output addresses for direct data storage of the selected bytes of data into the data store in the second format, and wherein the address generator (118) comprises a set of local address generation registers (126) storing address generation parameters for configuring operation of the address generator (118).

9. An input interface according to Claim 8, wherein the address generation parameters are arranged to configure the address generator (118) to define a multi-dimensional address space within the data store (36) for storing multi-dimensional data sets.

10. An input interface according to Claims 8 or 9, wherein the address generator (118) is arranged to generate nested loops of address calculation procedures and the configuration of the nested loops is defined by the address generation parameters.

11. An input interface according to any preceding claim, further comprising:
at least one data port (52, 54) for receiving the at least one data stream from a data source (42, 44, 46), wherein the at least one data port (52, 54) comprises:
a FIFO for buffering one of the one or more data streams from the at least one direct memory access channel (64); the FIFO comprising an odd FIFO (66a) clocked on a rising-edge of a clock pulse and an even FIFO (66b) clocked on a falling-edge of a clock pulse; the operation of the odd or even FIFO being selectable to effect a single or double data rate.

12. An input interface according to Claim 11, wherein the at least one data port (52, 54) comprises a plurality of data input ports and each one of the at least one direct memory access channels (64) is coupled to all the data input ports and to the data store (36).

13. An input interface according to any preceding claim wherein the byte assembler (114) is arranged to change the order of received bytes of data in the data stream (110) for facilitating the change to the second format.

14. A programmable, high-speed data output interface for outputting one or more data sets received in a second format from a data store (36) of a parallel processing architecture, into at least one data stream in a first format, the interface comprising:
at least one direct memory access channel (140) for controlling the conversion of the one or more received data sets obtained from the data store (36) in the second format into one or more data streams in the first format, the at least one direct memory access channel (140) comprises a byte disassembler (158) having a plurality of locally configurable data processors (160) for controlling the disassembly of data words from the one or more received data sets; and wherein
each one of the plurality of data processors (160) comprises a set of local registers storing data byte selection parameters, including a register for storing an initial data input selection parameter for determining the initial data input for the processor, a register for storing an initial byte processing parameter for determining whether the first byte is to be processed, and a register for storing a data position selection parameter for determining the relative position of the data input within a constructable composite data word, to enable conversion of the one or more received data sets into at least one data stream for output in the first format.

15. A programmable, high-speed two-way data interface having an input side and an output side, the two-way interface comprising:
an input interface according to any of Claims 1 to 13 on the input side; and
an output interface according to Claim 14 on its output side.

## Patentansprüche

1. Programmierbare Hochgeschwindigkeitsdateneingabeschnittstelle zum Eingeben von einem oder mehreren Datenströmen (110), die in einem ersten Format empfangen wurden, in einen Datenspeicher (36) einer Parallelverarbeitungsarchitektur in einem zweiten Format, wobei die Schnittstelle Folgendes umfasst:
zumindest einen Kanal zum direkten Speicherzugriff (64) zum Steuern der Umwandlung der von dem einen oder mehreren Datenströmen (110) empfangenen Daten in dem ersten Format in das zweite Format, wobei der zumindest eine Kanal zum direkten Speicherzugriff (64) einen Byte-Assembler (114) umfasst, der eine Vielzahl von lokal konfigurierbaren Datenprozessoren (120) zum Steuern der Auswahl von Datenbytes aus den einen oder mehreren empfangenen Datenströmen (110) aufweist; und wobei
jeder von der Vielzahl von Datenprozessoren (120) einen Satz von lokalen Registern (122) aufweist, in denen Datenbyteauswahlparameter zum Konfigurieren des Betriebs des entsprechenden Prozessors (120) gespeichert sind, einschließlich eines Registers zum Speichern eines Anfangsdateneingabeauswahlparameters zum Bestimmen der Anfangsdateneingabe für den Prozessor, eines Registers zum Speichern eines Anfangsbyteverarbeitungsparameters zum Bestimmen, ob das erste Byte verarbeitet werden soll, und eines Registers zum Speichern eines Datenpositionsauswahlparameters zum Bestimmen der relativen Position der Dateneingabe in einem konstruierbaren Wort aus zusammengesetzten Daten, um eine Umwandlung des empfangenen Datenstroms zum Speichern in dem zweiten Format zu ermöglichen.

2. Eingabeschnittstelle nach Anspruch 1, wobei in dem Satz von lokalen Registern (122) ein Kanalauswahlparameter zum Bestimmen des Kanals zum direkten Speicherzugriff gespeichert ist, der zum Erzeugen eines Worts aus zusammengesetzten Daten verwendet werden soll.

3. Eingabeschnittstelle nach Anspruch 1 oder 2, wobei die Vielzahl von lokal konfigurierbaren Prozessoren (120) zumindest ein gemeinsames Register (123) umfasst, in dem ein oder zwei globale Betriebsparameter zum Steuern des Betriebs von allen der Vielzahl von lokal konfigurierbaren Prozessoren (120) gespeichert sind.

4. Eingabeschnittstelle nach Anspruch 3, wobei in dem zumindest einen gemeinsamen Register (123) ein Maskierungsparameter für die lokale Dateneingabe gespeichert ist oder wobei in dem zumindest einen gemeinsamen Register ein Auswahlparameter für die lokale Dateneingabe gespeichert ist.

5. Eingabeschnittstelle nach Anspruch 3 oder 4, wobei die globalen Betriebsparameter und die Datenbyteauswahlparameter ausgewählt sind, um einen empfangenen gemultiplexten Datenstrom zu demultiplexieren.

6. Eingabeschnittstelle nach Anspruch 3 oder 4, wobei die globalen Betriebsparameter und die Datenbyteauswahlparameter ausgewählt sind, um eine Vielzahl von empfangenen Datenströmen zusammenzustellen.

7. Eingabeschnittstelle nach einem der vorhergehenden Ansprüche, wobei der Byte-Assembler (114) mit Datengrößenparametern zum Bestimmen der Größe des kompilierten Datenworts konfiguriert werden kann.

8. Eingabeschnittstelle nach einem der vorhergehenden Ansprüche, wobei die Schnittstelle einen lokal konfigurierbaren Adressgenerator (118) zum Generieren von Ausgabeadressen für die direkte Datenspeicherung der ausgewählten Datenbytes in den Datenspeicher in dem zweiten Formal umfasst und wobei der Adressgenerator (118) einen Satz von lokalen Adressgenerierungsregistern (126) umfasst, in denen Adressgenerierungsparameter zum Konfigurieren des Betriebs des Adressgenerators (118) gespeichert sind.

9. Eingabeschnittstelle nach Anspruch 8, wobei die Adressgenerierungsparameter angeordnet sind, um den Adressgenerator (118) zu konfigurieren, um einen mehrdimensionalen Adressraum in dem Datenspeicher (36) zum Speichern von mehrdimensionalen Datensätzen zu definieren.

10. Eingabeschnittstelle nach Anspruch 8 oder 9, wobei der Adressgenerator (118) angeordnet ist, um geschachtelte Schleifen von Adressberechnungsvorgängen zu generieren und die Konfiguration der geschachtelten Schleifen durch die Adressgenerierungsparameter definiert ist.

11. Eingabeschnittstelle nach einem der vorhergehenden Ansprüche, ferner umfassend:
zumindest einen Datenport (52, 54) zum Empfangen des zumindest einen Datenstroms von einer Datenquelle (42, 44, 46), wobei der zumindest eine Datenport (52, 54) Folgendes umfasst:
ein FIFO zum Puffern der einen oder mehreren Datenströme von dem zumindest einen Kanal zum direkten Speicherzugriff (64); wobei der FIFO einen ungeraden FIFO (66a), der an einer steigenden Flanke eines Taktpulses getaktet ist, und einen geraden FIFO (66b) umfasst, der an einer fallenden Flanke eines Taktpulses getaktet ist; wobei der Betrieb des ungeraden oder geraden FIFO ausgewählt werden kann, um eine einfache oder doppelte Datenrate zu bewirken.

12. Eingabeschnittstelle nach Anspruch 11, wobei der zumindest eine Datenport (52, 54) eine Vielzahl von Dateneingabeports umfasst und jeder von den zumindest einen Kanälen für den direkten Speicherzugriff (64) an alle der Dateneingabeports und an den Datenspeicher (36) gekoppelt ist.

13. Eingabeschnittstelle nach einem der vorhergehenden Ansprüche, wobei der Byte-Assembler (114) angeordnet ist, um die Reihenfolge der empfangenen Datenbytes in dem Datenstrom (110) zum Vereinfachen der Änderung in das zweite Format zu verändern.

14. Programmierbare Hochgeschwindigkeitsdatenausgabeschnittstelle zum Ausgeben von einem oder mehreren Datensätzen, die in einem zweiten Format aus einem Datenspeicher (36) einer Parallelverarbeitungsarchitektur empfangen wurden, in zumindest einem Datenstrom in einem ersten Format, wobei die Schnittstelle Folgendes umfasst:
zumindest einen Kanal zum direkten Speicherzugriff (140) zum Steuern der Umwandlung der aus dem Datenspeicher (36) empfangenen Daten in dem zweiten Format in ein oder mehrere Datenströme in dem ersten Format, wobei der zumindest eine Kanal zum direkten Speicherzugriff (140) einen Byte-Assembler (158) umfasst, der eine Vielzahl von lokal konfigurierbaren Datenprozessoren (160) zum Steuern der Zerlegung von Datenwörtern aus den einen oder mehreren empfangenen Datensätzen aufweist; und wobei
jeder von der Vielzahl von Datenprozessoren (160) einen Satz von lokalen Registern aufweist, in denen Datenbyteauswahlparameter gespeichert sind, einschließlich eines Registers zum Speichern eines Anfangsdateneingabeauswahlparameters zum Bestimmen der Anfangsdateneingabe für den Prozessor, eines Registers zum Speichern eines Anfangsbyteverarbeitungsparameters zum Bestimmen, ob das erste Byte verarbeitet werden soll, und eines Registers zum Speichern eines Datenpositionsauswahlparameters zum Bestimmen der relativen Position der Dateneingabe in einem konstruierbaren Wort aus zusammengesetzten Daten, um eine Umwandlung der einen oder mehreren empfangenen Datensätze in zumindest einen Datenstrom zur Ausgabe in dem ersten Format zu ermöglichen.

15. Programmierbare Zweiwege-Hochgeschwindigkeitsdatenschnittstelle, die eine Eingabeseite und eine Ausgabeseite aufweist, wobei die Zweiwege-Schnittstelle Folgendes umfasst:
eine Eingabeschnittstelle nach einem der Ansprüche 1 bis 13 auf der Eingabeseite; und
eine Ausgabeschnittstelle nach Anspruch 14 auf der Ausgabenseite.

## Revendications

1. Interface d'entrée de données à haute vitesse programmable pour entrer un ou plusieurs flux de données (110) reçus dans un premier format dans un magasin de données (36), d'une architecture de traitement parallèle, dans un second format, l'interface comprenant :
au moins un canal d'accès direct à la mémoire (64) pour contrôler la conversion des données reçues de l'un ou plusieurs flux de données (110) dans le premier format dans le second format, l'au moins un canal d'accès direct à la mémoire (64) comprend un assembleur d'octet (114) ayant une pluralité de processeurs de données configurables localement (120) pour contrôler la sélection d'octets de données de l'un ou plusieurs flux de données reçus (110) ; et dans laquelle
chacun de la pluralité de processeurs de données (120) comprend un ensemble de registres locaux (122) stockant des paramètres de sélection d'octet de données pour configurer le fonctionnement du processeur (120) correspondant, incluant un registre pour stocker un paramètre de sélection d'entrée de données initiale pour déterminer l'entrée de données initiale pour le processeur, un registre pour stocker un paramètre de traitement d'octet initial pour déterminer si le premier octet doit être traité, et un registre pour stocker un paramètre de sélection de position de données pour déterminer la position relative de l'entrée de données dans un mot de données composite constructible, pour activer la conversion du flux de données reçu pour stockage dans le second format.

2. Interface d'entrée selon la revendication 1, dans laquelle l'ensemble de registres locaux (122) stocke un paramètre de sélection de canal pour déterminer le canal d'accès direct à la mémoire à utiliser pour créer un mot de données composite.

3. Interface d'entrée selon les revendications 1 ou 2, dans laquelle la pluralité de processeurs configurables localement (120) comprend au moins un registre partagé (123) stockant un ou deux paramètres opérationnels globaux pour contrôler le fonctionnement de toute la pluralité de processeurs configurables localement (120).

4. Interface d'entrée selon la revendication 3, dans laquelle l'au moins un registre partagé (123) stocke un paramètre de masquage d'entrée de données local, ou dans laquelle l'au moins un registre partagé stocke un paramètre de sélection d'entrée de données locale.

5. Interface d'entrée selon les revendications 3 ou 4, dans laquelle les paramètres opérationnels globaux et les paramètres de sélection d'octet de données sont sélectionnés pour démultiplexer un flux de données multiplexé reçu.

6. Interface d'entrée selon les revendications 3 ou 4, dans laquelle les paramètres opérationnels globaux et les paramètres de sélection d'octet de données sont sélectionnés pour assembler ensemble une pluralité de flux de données reçus.

7. Interface d'entrée selon une quelconque revendication précédente, dans laquelle l'assembleur d'octet (114) est configurable avec un paramètre de taille de données pour déterminer la taille du mot de données compilé.

8. Interface d'entrée selon une quelconque revendication précédente, dans laquelle l'interface comprend un générateur d'adresse configurable localement (118) pour générer des adresses de sortie pour stockage de données direct des octets sélectionnés dans le magasin de données dans le second format, et dans laquelle le générateur d'adresse (118) comprend un ensemble de registres de génération d'adresse locaux (126) stockant des paramètres de génération d'adresse pour configurer le fonctionnement du générateur d'adresse (118).

9. Interface d'entrée selon la revendication 8, dans laquelle les paramètres de génération d'adresse sont agencés pour configurer le générateur d'adresse (118) pour définir un espace d'adresse multidimensionnel dans le magasin de données (36) pour stocker des jeux de données multidimensionnelles.

10. Interface d'entrée selon les revendications 8 ou 9, dans laquelle le générateur d'adresse (118) est agencé pour générer des boucles imbriquées de procédures de calcul d'adresse et la configuration des boucles imbriquées est définie par les paramètres de génération d'adresse.

11. Interface d'entrée selon une quelconque revendication précédente, comprenant en outre :
au moins un port de données (52, 54) pour recevoir l'au moins un flux de données d'une source de données (42, 44, 46), dans laquelle l'au moins un port de données (52, 54) comprend :
un FIFO pour mettre en mémoire tampon un du ou plusieurs flux de données du au moins un canal d'accès direct à la mémoire (64) ; le FIFO comprenant un FIFO impair (66a) chronométré sur un flanc avant d'une fréquence d'horloge et un FIFO pair (66b) chronométré sur un flanc arrière d'une fréquence d'horloge ; le fonctionnement des FIFO impair et pair étant sélectionnable pour effectuer un débit de données unique ou double.

12. Interface d'entrée selon la revendication 11, dans laquelle l'au moins un port de données (52, 54) comprend une pluralité de ports d'entrée de données et chacun du au moins un canal d'accès direct à la mémoire (64) est couplé à tous les ports d'entrée de données et au magasin de données (36).

13. Interface d'entrée selon une quelconque revendication précédente dans laquelle l'assembleur d'octet (114) est agencé pour changer l'ordre d'octets de données reçus dans le flux de données (110) pour faciliter le changement vers le second format.

14. Interface de sortie de données à haute vitesse programmable pour émettre en sortie un ou plusieurs jeux de données reçus dans un second format d'un magasin de données (36) d'une architecture de traitement parallèle, dans au moins un flux de données dans un premier format, l'interface comprenant :
au moins un canal d'accès direct à la mémoire (140) pour contrôler la conversion d'un ou plusieurs jeux de données reçus obtenus du magasin de données (36) dans le second format dans un ou plusieurs flux de données dans le premier format, l'au moins un canal d'accès direct à la mémoire (140) comprend un désassembleur d'octet (158) ayant une pluralité de processeurs de données configurables localement (160) pour contrôler le désassemblage de mots de données de l'un ou plusieurs jeux de données reçus ; et dans laquelle
chacun de la pluralité de processeurs de données (160) comprend un ensemble de registres locaux stockant des paramètres de sélection d'octet de données, incluant un registre pour stocker un paramètre de sélection d'entrée de données initiale pour déterminer l'entrée de données initiale pour le processeur, un registre pour stocker un paramètre de traitement d'octet initial pour déterminer si le premier octet doit être traité, et un registre pour stocker un paramètre de sélection de position de données pour déterminer la position relative de l'entrée de données dans un mot de données composite constructible, pour activer la conversion de l'un ou plusieurs jeux de données reçus dans au moins un flux de données pour sortie dans le premier format.

15. Interface de données bidirectionnelle à haute vitesse programmable ayant un côté entrée et un côté sortie, l'interface bidirectionnelle comprenant :
une interface d'entrée selon l'une quelconque des revendications 1 à 13 sur le côté entrée ; et
une interface de sortie selon la revendication 14 sur son côté sortie.
